# EUROPEAN PATENT APPLICATION

(11) **EP 1 278 206 A2**
(43) Date of publication of application: **22.01.2003**
(21) Application number: 02015595.8
(22) Date of filing: 15.07.2002
(51) Int. Cl.: G21C 5/06

(54) **Device for supporting a fuel assembly in a nuclear reactor**

(30) Priority: 16.07.2001 JP 2001215379; 16.10.2001 JP 2001318049; 22.05.2002 JP 2002147853
(71) Applicant: Kabushiki Kaisha Toshiba, Tokyo (JP)
(72) Inventor: Ukai, Masaru, Toshiba Corp., Minato-ku, Tokyo (JP); Tsumita, Kosaku, Toshiba Corp., Minato-ku, Tokyo (JP); Kato, Ryoma, Toshiba Corp., Minato-ku, Tokyo (JP); Fukamichi, Kenjiro, Toshiba Corp., Minato-ku, Tokyo (JP); Yamada, Yuji, Toshiba Corp., Minato-ku, Tokyo (JP); Sato, Makoto, Toshiba Corp., Minato-ku, Tokyo (JP); Shimazu, Tadaaki, Toshiba Corp., Minato-ku, Tokyo (JP); Tanabe, Tomoharu, Toshiba Corp., Minato-ku, Tokyo (JP); Matsumura, Hirotoshi, Toshiba Corp., Minato-ku, Tokyo (JP); Matsunaga, Keiji, Toshiba Corp., Minato-ku, Tokyo (JP); Okuda, Ken, Toshiba Corp., Minato-ku, Tokyo (JP)
(74) Representative: HOFFMANN - EITLE

(57) **Abstract**

A fuel inlet mechanism to introduce a coolant into a fuel assembly configured to be charged in a light water nuclear reactor, includes, a filter catching a foreign substance included in the coolant on an upstream side of the fuel assembly, the filter having a plurality of through holes to pass the coolant, and the through holes having an inlet portion, an outlet portion and at least one bent portion to a degree by which the outlet portion cannot be seen through from the inlet portion by a straight line.

## Description

### CROSS-REFERENCE TO RELATED APPLICATIONS

This application is based upon and claims the benefit of priority from Japanese Patent Applications No. 2001-215379 filed on July 16, 2001, No. 2001-318049 filed on October 16, 2001, and No. 2002-147853 filed on May 22, 2002, the entire contents of which are incorporated herein by reference.

### BACKGROUND OF THE INVENTION

### Field of the Invention

This invention relates to a fuel assembly used in a light-water nuclear reactor, a fuel supporting attachment for supporting a fuel assembly, and a fuel inlet mechanism for introducing coolant into a fuel assembly.

### Description of the Related Art

Generally, as a filter for catching a foreign substance for preventing the foreign substance in a fluid from passing through, there is used a wire gauze, a porous plate or the like. There is a possibility that a linear or strip-like foreign substance flows in a fluid in parallel with a flow direction. In order to prevent a linear foreign substance having a small wire diameter from passing through, there has been used a wire gauze or a porous plate having a hole smaller than the wire diameter. For example, there is a fuel assembly used in a light water nuclear reactor using a plurality of sheets of porous plates as a foreign substance filter for preventing a linear or strip-like foreign substance from passing therethrough (for example, refer to Japanese Patent Laid-Open No. 2000-284080).

Meanwhile, in fuel assemblies in recent years, higher burnup fraction formation is promoted for reducing fuel cycle cost, and a fuel assembly is being used for a long period of time as long as 1.2 through 1.5 times of a conventional period. In accordance with a long period of use, there is a tendency of increasing damage phenomena of the fuel member, and thus it has been pointed out that when such a fuel damage is caused, the operation efficiency has worsen due to stopping operation of the plant, replacement of the damaged fuel or the like. As one of problems related to operation of the nuclear reactor, it is pointed out that foreign substances having various dimensions are piled up in the fuel assembly. The foreign substances are brought about in construction, in operation and in periodic inspection and are, for example, small bolts, nuts, split pins, metal clips, weld slag, small wire pieces and the like. In operation of the nuclear reactor, the foreign substance present inside of the nuclear reactor and the primary system is moved by the coolant, and there is a possibility that the foreign substance is mixed into the fuel assembly and damages the fuel rod and the fuel spacer which are constituent elements of the fuel assembly. Particularly, a foreign substance in the shape of a wire piece may easily flow into the fuel assembly by coolant flow, since such foreign substance is light and has a large surface area. When the wire-like foreign substance which flows into the fuel assembly, is caught by the fuel spacer and vibrated by being exerted by Karman's vortex generated by the coolant flow and brought into contact with a surface of the fuel rod, the foreign substance wears and damages the cladding tube of the fuel rod. This wear is referred to as fretting wear and damages the fuel rod in a combination with acceleration of corrosion under high temperature and high pressure conditions in the nuclear reactor. When the fuel rod is damaged, the uranium or fission products charged into the fuel rod may be leaked into the coolant, and in this case it is necessary that the nuclear reactor be stopped, shipping is carried out, the damaged fuel assembly is found and is replaced by a new fuel assembly.

In order to prevent such an adverse influence of the foreign substance on the fuel assembly, in recent times, there has been promoted a trial of integrating a filter mechanism at a lower tie plate of a new fuel assembly, however, integration of the foreign substance filter to the fuel assembly brings about an increase in pressure loss in view of designing the fuel assembly and therefore, the foreign substance filter cannot be integrated to a certain kind of 9×9 type fuel. Further, when the filter function is integrated to a new fuel assembly, it takes about five years through seven years until all of the conventional fuel assemblies charged into the nuclear reactor have been replaced by the fuel assemblies having the filter function. In view of the situation, it has been desired to provide the filter function regardless of the type of the fuel assembly and regardless of whether a new or old fuel assembly is used. However, in providing the filter function to the fuel assemblies being used, it is necessary to carry out disintegration and reintegration of the fuel assemblies inside of the atomic power generation plant by remote operation, which is very expensive.

Moreover, according to the above-described conventional foreign substance filter, the diameter of holes of the filter must be reduced to hamper a foreign substance from passing by a wire gauze or a porous plate, therefore pressure loss increases and a flow rate of the passing fluid is reduced and also there is a possibility that it is difficult to ensure a necessary flow rate. Meanwhile, in the case of a part in which it is important to adjust a flow rate, for example, a fuel assembly or a fuel support metal piece used in a light water nuclear reactor, it is important to achieve a flow rate necessary to control the pressure loss to a necessary minimum and therefore, a hole diameter of a porous plate cannot be reduced so much. As a result, a linear or a strip-like foreign substance cannot necessarily be prevented from passing. Further, the above-mentioned conventional foreign substance filter is frequently constructed by a constitution satisfying its function by overlapping several sheets of metal gauzes or porous plates and, thus, if an integration accuracy of the metal gauzes or the porous plates is poor, there is a possibility of significantly deteriorating the function. For such a problem, there has been made proposals of arranging a filter-like constitution having a bent flow path at a lower tie plate of a fuel assembly (refer to Japanese Patent Publication (Koukai) No. 7-253491 and Japanese Patent Publication (Koukai) No. 4-230892). However, according to any of these, it is necessary to work on the lower tie plate, and further, the structure is complicated.

Further, in recent years, there has been proposed a plan of preventing a foreign substance from being mixed with a fuel assembly by inserting a foreign substance filter from an upper side of a fuel supporting attachment to an inner portion thereof, however, the foreign substance filter may interfere with a seat face of the lower tie plate of the fuel assembly in taking out or charging the fuel assembly and stable function cannot be achieved. That is the position is shifted, and the foreign substance filter is brought into press contact with the seat face of the lower tie plate and the foreign substance filter is taken out while being attached to the fuel assembly in taking out the fuel assembly. Moreover, in this plan, a position of seating the fuel assembly is changed to be higher, a position of charging the fuel assembly differs by presence or absence of the foreign substance filter, and it becomes a situation that these factors influence core characteristics.

### SUMMARY OF THE INVENTION

In view of the foregoing, it is an object of the invention to provide a fuel supporting attachment, fuel inlet mechanism and a fuel assembly for preventing or controlling a foreign substance from passing through and minimizing pressure loss, with a simple structure with no need of modifying or changing the fuel assembly or its design with regard to a new fuel assembly and/or a used fuel assembly.

Other and further objects of this invention will become apparent upon an understanding of the illustrative embodiments to be described herein or will be indicated in the appended claims while various advantages not referred to herein will be apparent to one skilled in the art upon employment of the invention in practice.

According to one aspect of the present invention, there is provided a fuel inlet mechanism to introduce a coolant into a fuel assembly configured to be charged in a light water nuclear reactor, including, a filter which catches a foreign substance included in the coolant on an upstream side of the fuel assembly, the filter having a plurality of through holes to pass the coolant, and the through holes having an inlet portion, an outlet portion and at least one bent portion to a degree by which the outlet portion cannot be seen through from the inlet portion by a straight line.

According to another aspect of the present invention, there is provided a fuel supporting attachment to hold a fuel assembly configured to be charged in a light water nuclear reactor, including, a coolant passage portion to introduce a coolant into the fuel assembly, a control rod introducing hole portion to introduce a control rod into a core of the nuclear reactor, a coolant introducing hole portion arranged at a periphery of a lower part of the fuel supporting attachment, and a filter having an orifice, arranged at the coolant introducing hole portion to intervene a foreign substance included in the coolant to flow into the fuel assembly.

According to still another aspect of the present invention, there is provided a fuel supporting attachment to hold a fuel assembly configured to be charged in a light water nuclear reactor, including, a coolant passage portion to introduce a coolant into the fuel assembly, a coolant introducing hole portion arranged at a periphery of a lower part of the fuel supporting attachment, a rectifying portion having an inclined face to make a flow of a coolant formed inside the fuel supporting attachment toward the fuel assembly, and a foreign substance storage portion arranged at a lower side of the rectifying portion to catch a foreign substance included in the coolant flowing in from a side of the rectifying portion.

According to still another aspect of the present invention, there is provided an arrangement, including, a fuel assembly configured to be charged in a light water nuclear reactor, having, a plurality of fuel rods, an upper tie plate which supports upper ends of the fuel rods, a lower tie plate which supports lower ends of the fuel rods, a first filter arranged inside of the lower tie plate, which catches a foreign substance included in a coolant having a coolant flow path from a lower end side of the lower tie plate as an ascending flow at a periphery of the fuel rods, and a fuel supporting attachment which holds the fuel assembly, having a second filter which catches a foreign substance included in a coolant on an upstream side of the fuel assembly, and wherein the first filter and the second filter have a plurality of holes inside of which the coolant flows, the holes including at least one bent portion to a degree by which an outlet portion of a hole cannot be seen through from an inlet portion of the hole by a straight line.

### BRIEF DESCRIPTION OF THE DRAWINGS

A preferred form of the present invention is illustrated in the accompanying drawings in which:
Fig. 1 is a vertical sectional view of a vicinity of a fuel assembly of an embodiment according to the invention;
Fig. 2A is a plan view showing a fuel supporting attachment of a first embodiment constructing a fuel inlet mechanism in this invention;
Fig. 2B is a vertical sectional view taken along a line IIB-IIB of Fig. 2A;
Fig. 2C is a plan view of partially schematic representation viewed from a line IIC-IIC of Fig. 2B;
Fig. 3 is a sectional view enlarging an essential portion along a flow path of a filter shown in Fig. 1 or Fig. 2 according to a third embodiment of this invention;
Fig. 4A is a plan view enlarging an essential portion viewed from a line IVA-IVA of Fig. 3 in case of a rectangular flow path;
Fig. 4B is a plan view enlarging an essential portion viewed from a line IVB-IVB of Fig. 3 in case of a circular flow path;
Fig. 5A is a total plan view along a flow path of a filter shown in Fig. 1 or Fig. 2 according to a third embodiment of this invention;
Fig. 5B is a sectional view along a flow path viewed from a line VB-VB of Fig. 5A;
Fig. 6A is a total plan view along a flow path of a filter shown in Fig. 1 or Fig. 2 according to a fourth embodiment of this invention;
Fig. 6B is a sectional view along a flow path viewed from a line VIB-VIB of Fig. 6A;
Fig. 6C is a sectional view enlarging an essential portion of Fig. 6B;
Fig. 7A is an assembled perspective view showing a detailed structure of the filter shown in Fig. 6A;
Fig. 7B is a plan view of a transverse plate before integrating the filter components shown in Fig. 7A;
Fig. 7C is a plan view of a vertical plate before integrating the filter components shown in Fig. 7A;
Fig. 8A is a plan view schematically showing a plate constructing a filter shown in Fig. 1 or Fig. 2 according to a fifth embodiment of this invention;
Fig. 8B is another plan view of a plate constructing a filter which differs at positions of arranged holes from the plate in Fig. 8A;
Fig. 8C is an assembled sectional view showing a part of a filter combined with components shown in Figs. 8A and 8B and other parts.
Fig. 9A is a plan view schematically showing a plate constructing a filter shown in Fig. 1 or Fig. 2 according to a sixth embodiment of this invention;
Fig. 9B is another plan view of a plate constructing a filter which differs at positions of arranged holes from the plate in Fig. 9A;
Fig. 9C is an assembled sectional view showing a part of a filter combined with components shown in Figs. 9A and 9B and other parts.
Fig. 10 is a sectional view of a part of a filter constituting a modified example of the filter shown in Fig. 5 viewed from a direction orthogonal to a flow path according to a seventh embodiment of this invention;
Fig. 11 is a sectional view of a part of a filter constituting a modified example of the filter shown in Fig. 10 viewed from a direction orthogonal to a flow path;
Fig. 12A is a total plan view along a flow path of a filter according to an eighth embodiment of this invention;
Fig. 12B is a sectional view along a flow path viewed from a line XIIB-XIIB of Fig. 12A;
Fig. 13A is a plan view along a flow path of a filter according to a ninth embodiment of this invention;
Fig. 13B is a sectional view viewed from a line XIIIB-XIIIB of Fig. 13A;
Fig. 14A is a plan view along a flow path of a filter constituting a modified example of the filter shown in Fig. 13A;
Fig. 14B is a sectional view viewed from a line XIVB-XIVB of Fig. 14A;
Fig. 15A is a plan view along a flow path of a filter constituting a modified example of the filter shown in Fig. 14A;
Fig. 15B is a sectional view viewed from a line XVB-XVB of Fig. 15A;
Fig. 16 is a plan view along a flow path showing a part of a filter according to a tenth embodiment of this invention;
Fig. 17A is a schematic plan view showing a filter constituting a modified example of the filter shown in Fig. 16;
Fig. 17B is a schematic plan view showing a filter constituting a modified example of the filter shown in Fig. 17A;
Fig. 18 is a partially sectional view of a fuel supporting attachment according to an eleventh embodiment of this invention.

### DETAILED DESCRIPTION OF THE INVENTION

An explanation will be given of embodiments in this invention in reference to the drawings as follows. Common or similar portions are attached with common reference numerals in drawings and a duplicated explanation thereof will properly be omitted.

### First Embodiment

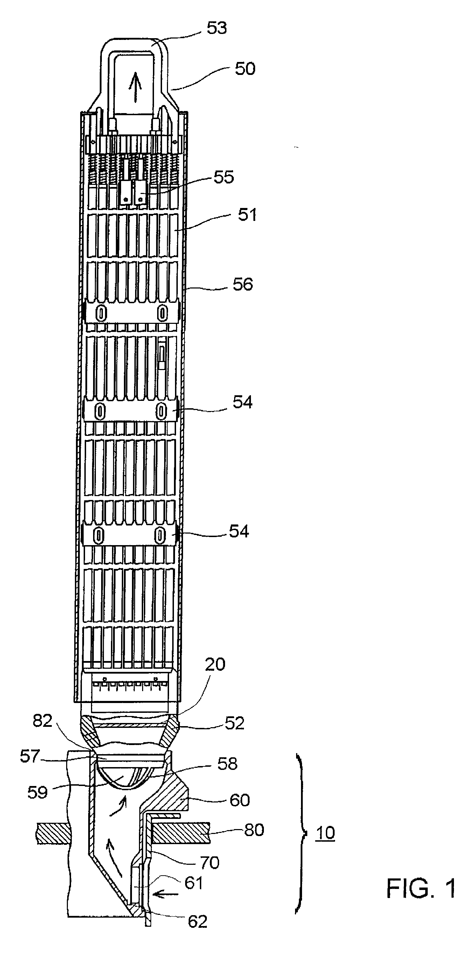

Fig. 1 shows a fuel assembly according to a first embodiment of this invention, in which it shows an example of this embodiment being applied to a fuel assembly for a boiling water reactor. The fuel assembly 50 includes a plurality of portions of fuel rods 51 aligned in a lattice shape and a single portion or a plurality of portions of water rods 55. Lower ends and upper ends of the fuel rods 51 and water rods 55 are fixed to a lower tie plate 52 and an upper tie plate 53, respectively. There are a plurality of fuel spacers 54 between the lower tie plate 52 and the upper tie plate 53 (here only three fuel spacers are shown representatively), thereby intervals among the fuel rods 51 and the water rods 55 are maintained. Sides of the fuel assembly 50 are covered by a channel box 56, having a section approximately in a square shape, an upper end and a lower end of which are opened. An inlet nozzle 57 constituting an inlet of coolant into the fuel assembly 50 is arranged at a lower end of the lower tie plate 52. The inlet nozzle 57 has and an insertion guide 58, and the fuel assembly 50 is mounted on an opening 82 above the fuel supporting attachment 60 (shown in Fig. 1) and is guided by the insertion guide 58. This fuel supporting attachment 60 is held at an upper end portion of a control rod guide pipe 70 in a reactor pressure vessel (not illustrated) by being inserted into an opening of a core support plate 80 up to a middle thereof.

A coolant introducing hole 61, which is a gate of the coolant into the fuel supporting attachment 60 is arranged to be directed horizontally and is attached with an inlet orifice 62. According to this embodiment, there is further arranged a filter 20 inside of the lower tie plate 52 to cross in the horizontal direction. A precise description of a structure of the filter 20 will be given later. In this embodiment, in operating the nuclear reactor, the coolant is introduced from the inlet orifice 62 into the fuel supporting attachment 60 along the horizontal direction, and enters from the inlet nozzle 57 toward the upper tie plate turning the direction of coolant flow into an upper direction. In passing through the filter 20 along the upper direction, foreign substances contained in the coolant are caught by the filter 20, and only the coolant removed of the foreign substances flows at a periphery of the fuel rod 51 in the channel box 56.

### Second Embodiment

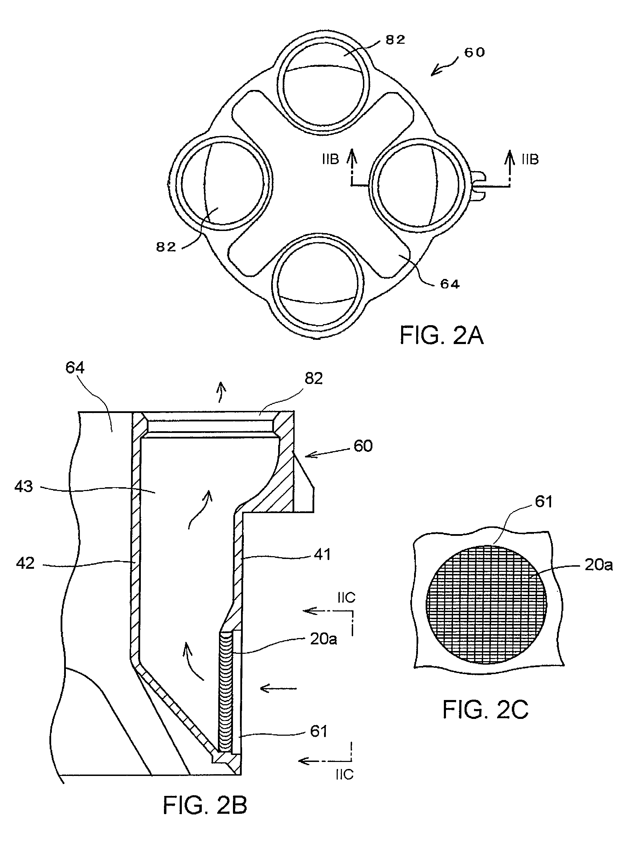

Next, an explanation of a fuel inlet mechanism according to a second embodiment of this invention will be given in reference to Figs. 2A, 2B and 2C. A fuel inlet mechanism 10 of this embodiment is comprised of mostly a fuel introducing attachment 60, however, the fuel inlet mechanism could be any structure introducing upstream of the fuel assembly that provides coolant into the fuel assembly.

The fuel supporting attachment 60 is mounted on the core support plate 80 as shown in Fig. 2A, 2B and 2C, and each fuel supporting attachment 60 supports four fuel assemblies 50 from the lower side and has four openings 82 to pass the coolant into the fuel assemblies 50. In the fuel supporting attachment 60, an outer wall 41 and an inner wall 42 constitute a coolant passage 43 under the opening 82. A coolant introducing hole 61 is arranged under the outer wall 41, that is, at each gate portion of the fuel supporting attachment 60 directed toward the respective opening 82, and each coolant introducing hole 61 is formed like an erected ring. In this embodiment, a filter 20a is arranged at the respective coolant introducing hole 61. A description of structure of the filter 20a will be given later. And the control rod insertion hole 64 is arranged at a center of the fuel supporting attachment 60 through which a single control rod (not illustrated) with a section in cross shape passes in the vertical direction.

According to this embodiment, the coolant passes through the filter 20a arranged at the coolant introducing hole 61 of the fuel supporting attachment 60 substantially in a horizontal direction and flows into the fuel supporting attachment 60. At this occasion, when foreign substances are contained in the coolant, the foreign substances are caught by the filter 20a and thus they can be hampered or restrained from flowing into the fuel supporting attachment 60. The coolant inside of the fuel supporting attachment 60 is directed in the upper direction and is introduced into the fuel assembly 50 from a coolant inlet opening 59 shown in Fig. 2. According to this embodiment, pressure loss of the filter 20a can be adjusted by designing the filter 20a, and thus, the core inlet orifice 62 can be omitted.

### Third Embodiment

Next, an explanation of detailed structure of the above-mentioned filters 20 or 20a will be given according to a third embodiment of this invention. Structures of the filter 20 and the filter 20a are common to both filters and the following explanation will be given of the filter 20 representatively.

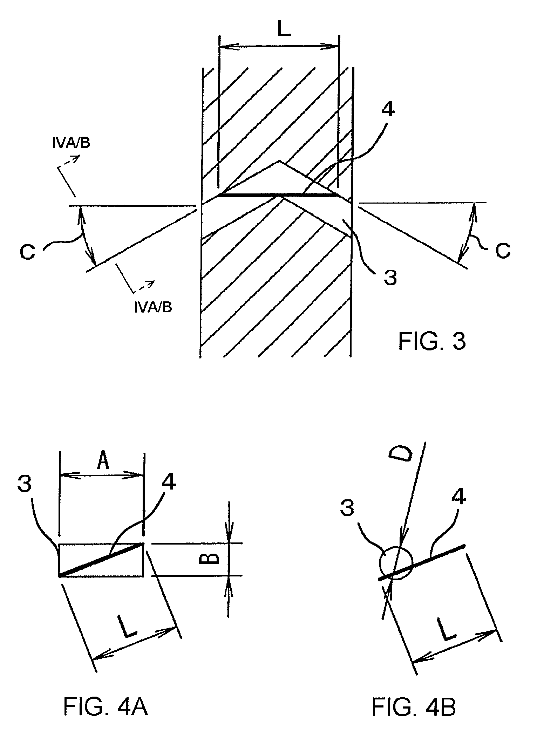

The filter 20 is constituted by aligning a number of passages 3 in a shape of a character V (or "Λ" lambda in the Greek alphabet, that is, a passage has a bent portion) shown in Fig. 3 in parallel. A shape of the flow path 3 viewed from a flow direction D is, for example, a rectangular shape as shown in Fig. 4A or a circular shape as shown in Fig. 4B. In the case of the rectangular hole 1 shown in Fig. 4A, a condition of catching a linear foreign substance 4 with a length L (for example, L is assumed to be about ten millimeters) in a direction orthogonal to the flow by the filter 20 is L > √(A² + B²), wherein a transverse length and a vertical length of the hole are designated by notation A and B, respectively. And in the case of the circular hole 2 as shown in Fig. 4B, when a diameter of the hole is designated by notation D, the condition is L > D. Further, in the case of the rectangular hole shown in Fig. 4A, when the linear foreign substance 4 with a length L becomes parallel with the flow, a condition of catching the linear foreign substance 4 by the filter is L > (B / sinC)• 2, as is known from Fig. 3, incidentally an angle of bending the passage is constituted by an angle C symmetrically on the inlet side and on the outlet side. By constituting the passage by such a shape and dimensions, in comparison with a normal filter of a porous plate, foreign substance, particularly a linear or strip-like foreign substance, can firmly be caught; nevertheless the area of the passage is arranged comparatively large and accordingly the pressure loss is comparatively small.

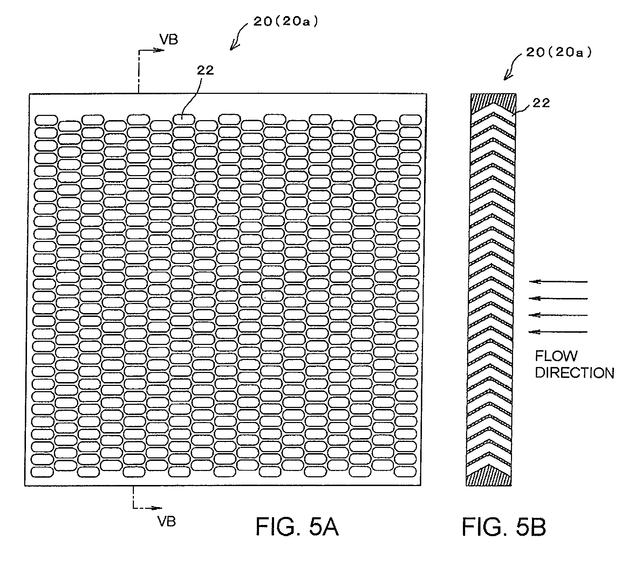

Figs. 5A and 5B show an example of a total structure of the filter 20 (20a) in this embodiment. According to this embodiment, as shown in Fig. 5A, flow passages 22 each having a passage opening face (cross face) in an oval shape, are aligned in a shape of a staggered lattice. And as shown in Fig. 5B, the respective flow passages 22 are constituted by holes in a "V"-like shape and are in parallel with each other. Such a flow passage 22 can be fabricated by, for example, mechanical working, precision casting, laser machining, electron beam machining or the like. By fabricating the flow passage 22 accurately and uniformly by such a method, a turbulent flow can be rectified. And by changing at least one of a shape of a flow passage opening face, an angle of a flow path, a number of pieces and alignment of flow passage holes, the pressure loss can be adjusted, and thereby, a flow rate of a passing fluid can be adjusted.

### Fourth Embodiment

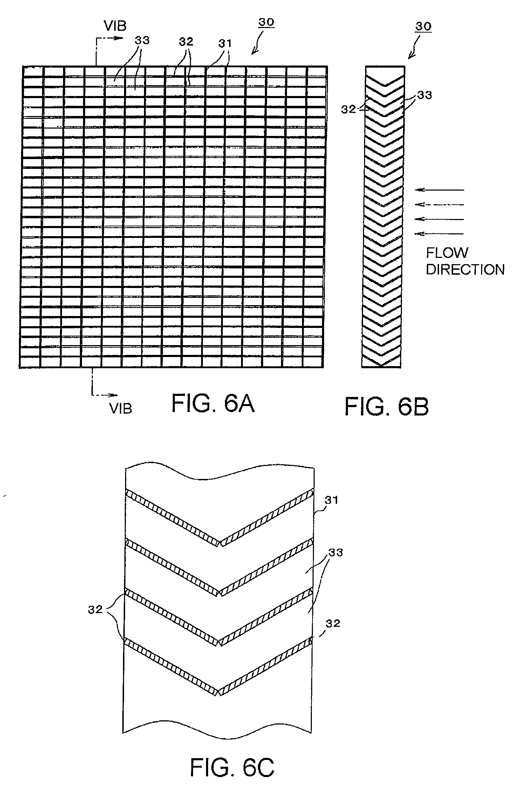

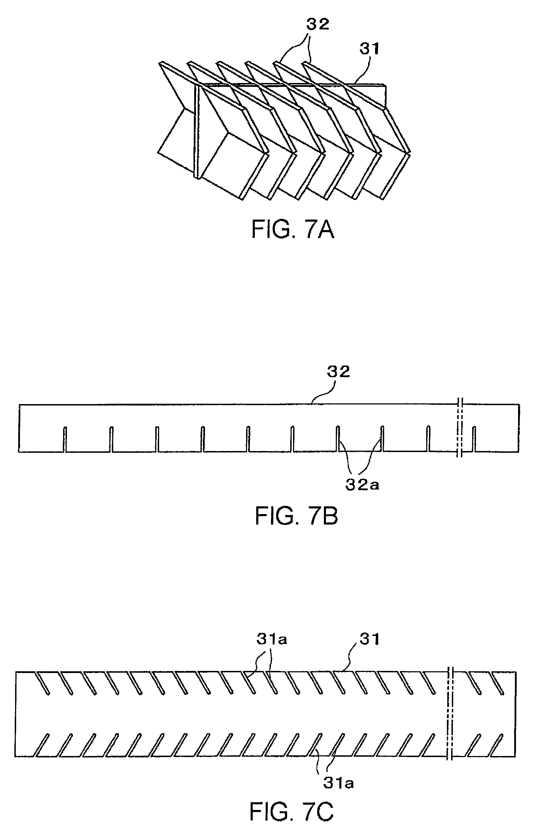

Next, an explanation of a total structure of a filter substitutable for the filter 20 or 20a according to a fourth embodiment of this invention will be given in reference to Figs. 6A, 6B, 6C, 7A, 7B and 7C. A filter 30 shown in Figs. 6A, 6B and 6C is constructed by combining pluralities of vertical plates 31 and transverse plates 32 in a lattice shape and aligning these plates like a checker board to thereby form a number of "V"-like (hat-like) flow passages 33 among these plates. As shown in Fig. 7B, a plurality of slits 32a are provided along one long side of the transverse plate 32 substantially at equal intervals and in a direction orthogonal to the long side. And as shown in Fig. 7C, a plurality of slits 31a are provided along long sides on both sides of the vertical plate 31 substantially at equal intervals in parallel with each other. The slits 31a on the both sides make predetermined angles relative to the respective long sides. By bringing the slits 32a of the transverse plates and the slits 31a of the vertical plates in mesh with each other up to depth sides thereof, an arrangement of the "V"-like flow passages is formed as shown in Fig. 7A. According to this embodiment, in comparison with the third embodiment shown in Fig. 5, fabrication of the filter is facilitated, and waste of the material is inconsiderable by using plate components.

### Fifth Embodiment

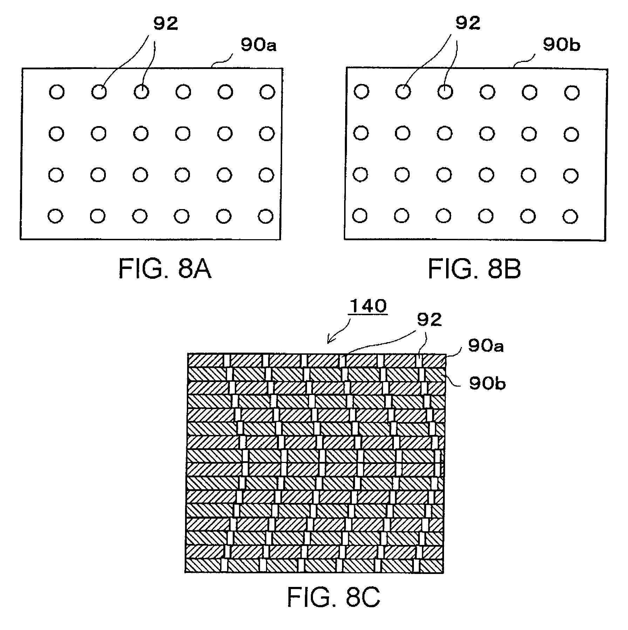

Next, an explanation of a total structure of a filter substitutable for the filter 20 or 20a according to a fifth embodiment of this invention will be given in reference to Figs. 8A, 8B and 8C. A filter 140 shown in Fig. 8C is constructed by overlapping a plurality of sheets of plates (a plate 90a, a plate 90b and so on) each arranged with a plurality of through holes 92 as shown in Figs. 8A and 8B. Positions of making the holes 92 are shifted in the horizontal direction for the respective plates and as shown in Fig. 8C, as a whole, there is formed an alignment of the "V"-like flow paths similar to that shown in Fig. 3. Moreover, the shape of the hole 92 of the respective plate is not limited to a circle as shown in Figs. 8A and 8B but can be constituted by various shapes, and the holes 92 can be constituted by various arrangements such as a square lattice shape illustrated in Fig. 8C as well as a shape of a staggered lattice. According to this embodiment, in comparison with the above-mentioned embodiments such as shown in Fig. 5, fabrication of the filter is facilitated, and waste of the material is inconsiderable by using plate components.

According to any one of the embodiments explained above, the through holes are constituted by a "V"-like shape, that is, a shape of the flow passage in which an inlet portion and an outlet portion are constituted by a linear shape and a bent portion is constituted between the inlet portion and the outlet portion. However, there may be constituted a shape of a flow passage by which an outlet of the hole cannot be seen through from an inlet of the hole by a straight line. There may also be a flow passage shape having a plurality of bent portions or a flow passage shape which is totally bent without a straight line portion.

### Sixth Embodiment

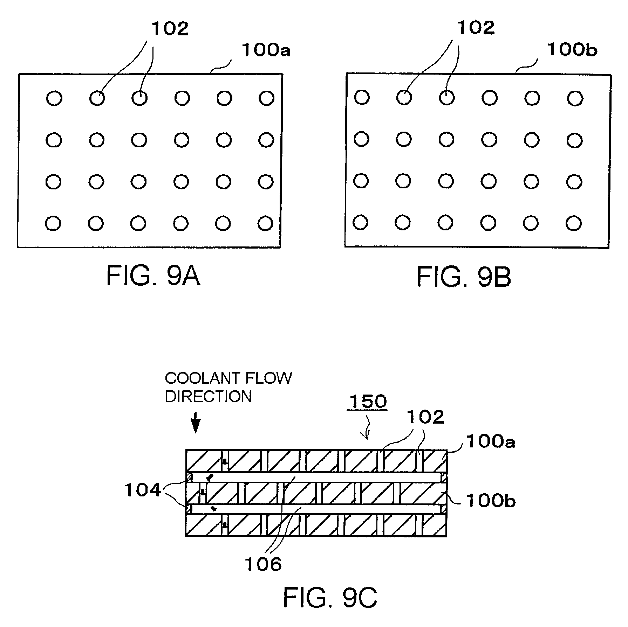

Next, an explanation of a total structure of a filter substitutable for the filter 20 (20a) according to a sixth embodiment of this invention will be given in reference to Figs. 9A, 9B and 9C. A filter 150 shown in Fig. 9C is constituted by arranging a plurality of sheets of plates (a plate 100a, a plate 100b and so on) each arranged with a plurality of through holes 102 as shown in Figs. 9A and 9B, and arranging the plates substantially in parallel with each other by interposing spacers 104. A gap 106 is formed between the respective plates (a plate 100a, a plate 100b and so on) by the spacer 104. Positions of the through holes 102 of contiguous two sheets of the plates (100a, 100b) via the gap 106 are shifted from each other in the horizontal direction, thereby, a flow passage shape in which an outlet portion of the passage cannot be seen through from an inlet of the passage by a straight line is constituted. Coolant passing through a first hole 102 of the respective plate (100a, 100b or the like) can be directed to another hole 102 of a successive plate, next to the first hole 102, by changing its flow to the horizontal direction at the gap 106.

### Seventh Embodiment

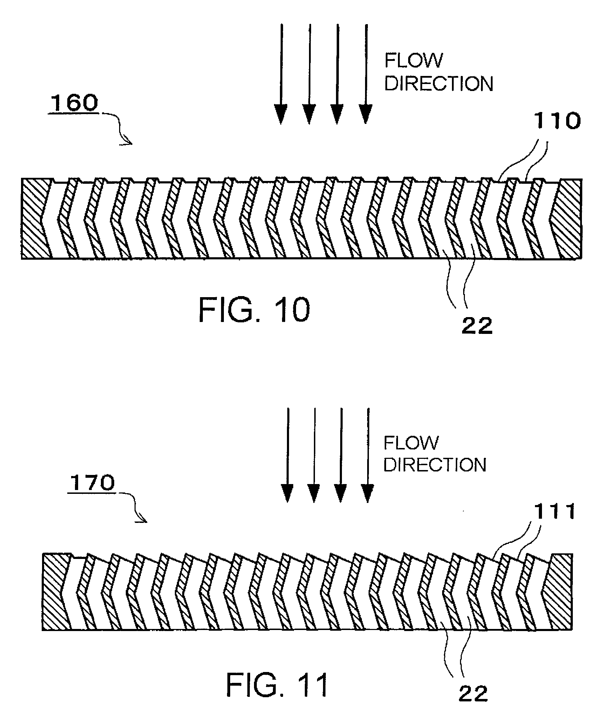

Next, an explanation of a total structure of a filter substitutable for the filter 20 or 20a according to a seventh embodiment of this invention will be given in reference to Fig 10. A filter 160, based on, for example, the structure of the filter 20 or 20a shown in Fig. 5, is made by fabricating a groove 110 at a vicinity of an inlet portion of the respective through hole 22. According to this embodiment, even when particularly a strip-like foreign substance is caught at a vicinity of the inlet portion of the through hole 22 of the filter 160, the flow passage is ensured by the groove and is not closed.

Further, a filter 170 shown in Fig. 11 is a modified example of the filter 160 shown in Fig. 10, and instead of fabricating the groove 110 of the filter 160, a groove 111 of the filter 170 is fabricated inclined to an opening face of the flow passage. According to this embodiment, not only an effect the same as that of the filter 160 shown in Fig. 10 is achieved but also an amount of fabrication of the filter is smaller than that in the filter 160 shown in Fig. 10 and waste of material is inconsiderable.

### Eighth Embodiment

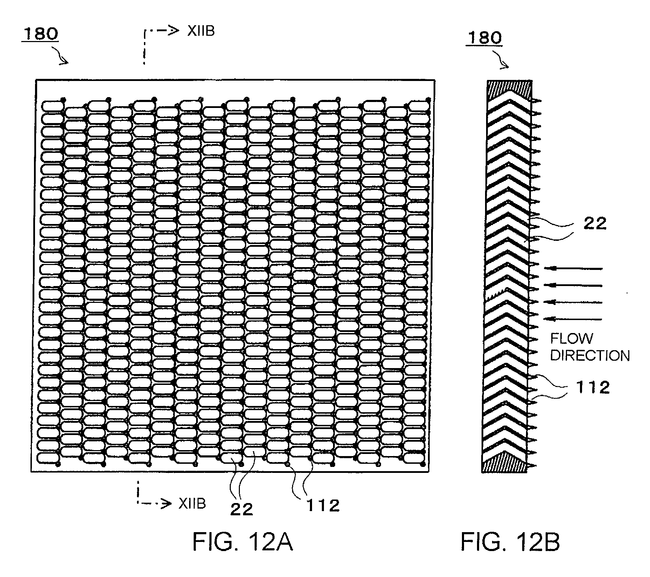

Next, an explanation of a total structure of a filter substitutable for the filter 20 or 20a according to an eighth embodiment of this invention will be given in reference to Figs 12A and 12B. A filter 180 shown in Fig. 12A, based on, for example, the structure of the filter 20 or 20a shown in Fig. 5, is provided projections 112 at a periphery of the inlet portion of the respective hole 22. According to this embodiment, even when particularly, a strip-like foreign substance is caught at a vicinity of the inlet portion of the through hole 22 of the filter 180, the foreign substance is caught by the projection 112 and therefore, the flow passage at the inlet portion of the through hole 22 is ensured and is not closed.

According to the above-mentioned embodiments of Fig. 10 through Fig. 12A, 12B, based on the structure of the filter 20 or 20a shown in Fig. 5, the groove or the projection is provided at a vicinity of the inlet portion of the respective through hole 22. The groove or the projection explained here is also applicable to other embodiments such as those shown in Figs. 6A, 6B, 6C through Figs. 9A, 9B, 9C.

### Ninth Embodiment

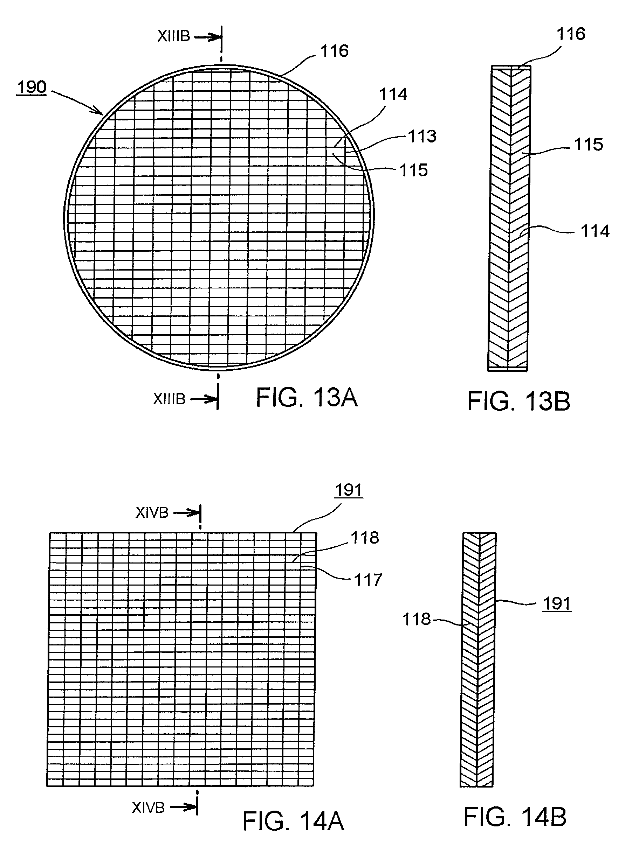

Next, an explanation of a total structure of a filter substitutable for the filter 20 or 20a according to a ninth embodiment of this invention will be given in reference to Figs 13A and 13B. A filter 190 shown as a plan view in Fig. 13A, composed of the fuel supporting attachment having orifices, is made by assembling vertical plates 113 each in a simple flat plate shape and transverse plates 114 bent in a "V"-like shape at an angle of 90 degrees through 150 degrees, preferably about 120 degrees, at a central portion thereof, substantially in a lattice-like shape, and coolant flow passages 115 are formed by the vertical plates 113 and the transverse plates 114. And an assembly of the vertical plates 113 and the transverse plates 114 in the lattice-like shape is contained and fixedly attached to inside of a frame 116 substantially in a circular shape and the circular frame 116 is mounted to inside of the coolant introducing hole 61. This filter 190 with orifices is constituted to provide a filtration function for preventing a wire-like foreign substance having a length of about 10 millimeters or a plate-like foreign substance having a length of a side thereof of about 10 millimeters from passing through, by assembling the vertical plates 113 and the transverse plates 114 substantially in the lattice-like shape as described above.

Further, in operating the nuclear reactor, a coolant passes through the filter 190 arranged at the coolant introducing hole 61 of the fuel supporting attachment 60 and flows into the fuel assembly 50 via the coolant flow passage 43. And in this process, a foreign substance included in the coolant is caught by the filter 190 with orifices to thereby prevent the foreign substance from flowing into the fuel supporting attachment 60 and the fuel assembly 50.

Fig. 13B is a sectional view taken along a line XIIIB-XIIIB of Fig. 13A, showing a state in which the transverse plates 114 are bent in the V-like shape at an angle of about 120 degrees substantially at the central portion. Although the figure in this embodiment shows a constitution of the transverse plate 114 bent in the V-like shape, the constitution of bending a flow direction of the coolant upwardly and downwardly at a plurality of locations is also applicable. Moreover, the flow direction of the coolant may be bent by overlapping a plurality of pieces of lattices, in which the transverse plates 114 are inclined to the flow direction of the coolant in skewed downward directions or skewed upward directions at angles of 15 degrees through 45 degrees, such that a direction of inclination of each traverse plate 114 successively differs.

Figs. 14A and 14B show another example of a filter 191, which is a modification of the filter shown in Fig. 13A constituted substantially in a square shape, wherein Fig. 14A shows a front face thereof and Fig. 14B shows a section of the filter taken along a line B-B of Fig. 14A. The filter 191 is formed by constituting vertical plates 117 and transverse plates 118 in the V-like shape in a lattice-like shape similar to the filter 190. Therefore, operation and effect similar to those shown in Fig. 13A are achieved also by using the filter 191.

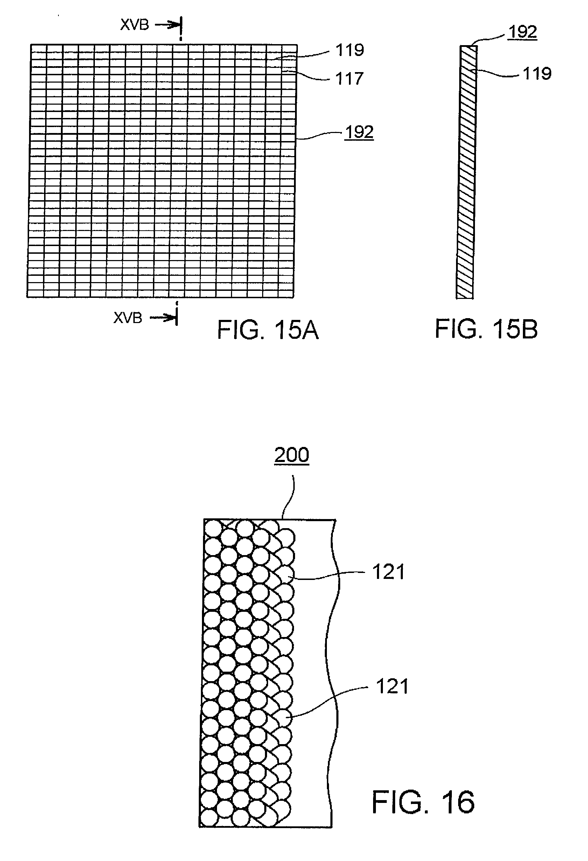

Figs. 15A and 15B show still another example of a filter 192, which is a modification of the filter 191 devised in consideration of fabrication advantages of the filter 191, substantially in a square shape as shown in Fig. 14, and constructed substantially in a lattice-like shape by vertical plates 117 and transverse plates 119. Fig. 15A shows a front view and Fig. 15B shows a section taken along a line B-B of Fig. 15A. The transverse plate 119 is constituted by being inclined to a horizontal line at about 30 degrees and by overlapping a plurality of sheets of the filter 192 constituted substantially in the lattice-like shape in this way, and thereby, a constitution similar to that shown in Fig. 14A can be achieved.

### Tenth Embodiment

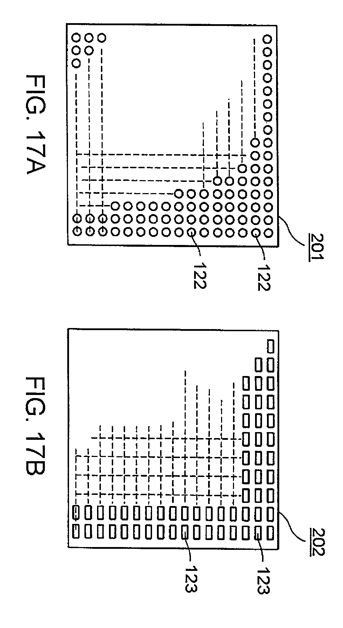

Fig. 16 shows a filter having orifices according to a tenth embodiment of this invention. A filter 200 is composed by aggregating a number of pieces of thin-walled circular tubes 121 each having an outer diameter of about 2 millimeters through 5 millimeters in a bundle, and a flow passage constituted by the thin-walled circular tube 121 is bent at 90 degrees through 150 degrees at least at one location or more. Further, as another filter with orifices other than constituting the orifice by the lattice or the circular tubes as described above, a filter 201 with orifices shown in Fig. 17A can be constructed by overlapping a plurality of sheets of plates each having a wall thickness of 5 through 10 millimeters and having a number of circular holes 122 each having a diameter of 2 through 5 millimeters, and a filter 202 with orifices shown in Fig. 17B can be constructed by overlapping a plurality of sheets of plates each having a wall thickness of 5 through 10 millimeters and having a number of rectangular holes 123 each having a side of 2 through 5 millimeters.

### Eleventh Embodiment

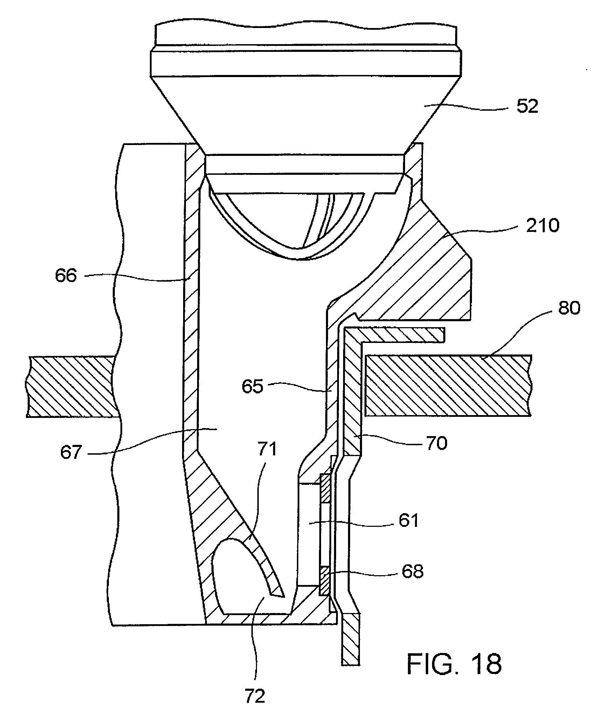

Fig. 18 shows a sectional view showing a fuel supporting attachment 210 according to an eleventh embodiment of this invention. In this fuel supporting attachment 210, a rectifying portion 71 is arranged at a face of the inner side wall 66 opposed to the coolant introducing hole 61 for turning a flow of a coolant flowing into the fuel supporting attachment 210 from the coolant introducing hole 61 into an upward direction, and a foreign substance storage portion 72 is formed under the rectifying portion 71 to communicate with the coolant flow passage 67 via a lower end edge of the rectifying portion 71. Further, the coolant flows into the coolant flow passage 67 via the coolant introducing hole 61 and impinges on the rectifying portion 71 to constitute a flow in an upward direction, meanwhile, a foreign substance contained in the coolant flowing into the coolant flow passage 25 from an upper portion of the fuel supporting attachment 210, is brought into the foreign substance storage portion 72 provided on a lower side of the rectifying portion 71 and is kept to be not lifted by the coolant flow even after starting the operation of the nuclear reactor. Additionally, needless to say, the filter function can further be promoted by integrating a filter with orifices to the fuel supporting attachment having the foreign substance storage portion.

Several embodiments of this invention have been illustrated and described above, however, a filter installed in the fuel supporting attachment can variously be modified to embody without deviating from technical thought of this invention. The fuel supporting attachment may be made of, for example, stainless steel, however, there may also be any other material enough to actualize the structure mentioned above.

As described above, according to this invention, a foreign substance, particularly a linear or a strip-like foreign substance, included in a coolant can be hampered or restrained from flowing to inside of the fuel assembly or to a periphery of the fuel rod, thereby, damages to fuel rods or fuel spacers can firmly be prevented. Further, the fuel supporting attachment can be designed to constitute pressure loss quite the same as that in the conventional example without modifying or changing of the fuel assembly per se.

## Claims

1. A fuel inlet mechanism (10) to introduce a coolant into a fuel assembly (50) configured to be charged in a light water nuclear reactor, comprising:
a filter (20a, 30, 140, 150, 160, 170, 180, 190, 200) which catches a foreign substance included in the coolant on an upstream side of the fuel assembly (50);
the filter (20a, 30, 140, 150, 160, 170, 180, 190, 200) having a plurality of through holes (1, 2) to pass the coolant; and
the through holes (1, 2) having an inlet portion, an outlet portion and at least one bent portion to a degree by which the outlet portion cannot be seen through from the inlet portion by a straight line.

2. The fuel inlet mechanism (10) as recited in Claim 1, wherein the through holes (1, 2) are arranged substantially in parallel with each other.

3. The fuel inlet mechanism (10) as recited in Claim 2, wherein the through holes (1) are formed a plurality of plates (31, 32) arranged at intervals and substantially in parallel with each other along a direction of a flow of the coolant.

4. The fuel inlet mechanism (10) as recited in Claim 1 or 2, wherein the filter (140) comprises a plurality of overlapped sheets of plates (90a, 90b) having a plurality of holes (92), positions of the holes of the plates differing slightly such that the filter has a coolant passage formed by a series of the holes of the overlapping plates.

5. The fuel inlet mechanism (10) as recited in one of Claims 1 through 4, wherein the filter (150) further includes:
a plurality of sheets of plates (100a, 100b) respectively containing pluralities of holes (102) and arranged substantially in parallel with each other; and
a plurality of filter spacers (104) arranged to form gaps among the plates (100a, 100b); and wherein
positions of the holes (102) of the plates (100a, 100b) slightly differ such that the filter has a coolant passage formed by a series of the holes of overlapping plates and the gaps.

6. The fuel inlet mechanism (10) as recited in one of Claims 1 through 5, wherein the filter (160, 170) further includes a groove (110, 111) arranged at a periphery of the inlet portion of a through hole (22).

7. The fuel inlet mechanism as recited in one of Claims 1 through 6, wherein the filter (180) further includes a projection (112) at a periphery of the inlet portion of a through hole (22).

8. A fuel supporting attachment (60) to hold a fuel assembly (50) configured to be charged in a light water nuclear reactor, comprising:
a coolant passage portion (43) to introduce a coolant into the fuel assembly;
a control rod introducing hole portion (64) to introduce a control rod into a core of the nuclear reactor;
a coolant introducing hole portion (61) arranged at a periphery of a lower part of the fuel supporting attachment (60); and
a filter (20a, 190) having an orifice, arranged at the coolant introducing hole portion (61) to intervene a foreign substance included in the coolant to flow into the fuel assembly (50).

9. The fuel supporting attachment (60) as recited in Claim 8, wherein the orifice of the filter (20a, 190, 200) is composed in a shape of a lattice which generates a coolant flow passage.

10. The fuel supporting attachment (60) as recited in Claim 9, wherein the filter (20a, 190) comprises a plurality of overlapped lattices.

11. The fuel supporting attachment (200) as recited in Claim 8, wherein the orifice of the filter (200) is composed by aggregating tubes (121) in a bundle to generate a coolant flow passage inside the tubes (121).

12. The fuel supporting attachment (200) as recited in Claim 11, wherein the filter comprises a plurality of the tubes (121).

13. The fuel supporting attachment (20a, 190, 191, 192) as recited in one of Claims 8 through 12, wherein the coolant flow passage generated by the orifice is inclined to an inflow direction of the coolant at an inlet portion of the filter.

14. The fuel supporting attachment (20a, 190, 191, 192) as recited in one of Claims 8 through 13, wherein the coolant flow passage generated by the orifice includes at least one bent portion relative to an inflow direction of a coolant flow.

15. The fuel supporting attachment (60) as recited in Claim 8, wherein the orifice of the filter (20a, 201, 202) comprises a plurality of sheets of overlapping plates, each of which has a plurality of holes (122, 123).

16. The fuel supporting attachment (60) as recited in Claim 15, wherein the holes (122, 123) arranged on a plate are substantially in one of a circular shape and a quadrilateral shape.

17. A fuel supporting attachment (210) to hold a fuel assembly (50) configured to be charged in a light water nuclear reactor, comprising:
a coolant passage portion to introduce a coolant into the fuel assembly (50);
a coolant introducing hole portion (61) arranged at a periphery of a lower part of the fuel supporting attachment;
a rectifying portion (71) having an inclined face to make a flow of a coolant formed inside the fuel supporting attachment toward the fuel assembly; and
a foreign substance storage portion (72) arranged at a lower side of the rectifying portion (71) to catch a foreign substance included in the coolant flowing in from a side of the rectifying portion.

18. An arrangement comprising:
a fuel assembly (50) configured to be charged in a light water nuclear reactor, including:
a plurality of fuel rods (51),
an upper tie plate (53) which supports upper ends of the fuel rods (51),
a lower tie plate (52) which supports lower ends of the fuel rods (51),
a first filter (20) arranged inside of the lower tie plate (52), which catches a foreign substance included in a coolant having a coolant flow path from a lower end side of the lower tie plate (52) as an ascending flow at a periphery of the fuel rods (51); and
a fuel supporting attachment (60) which holds the fuel assembly (50), having a second filter (20a, 30, 140, 150, 160, 170, 180, 190, 200) which catches a foreign substance included in a coolant on an upstream side of the fuel assembly; and wherein:
the first filter (20) and the second filter (20a, 30, 140, 150, 160, 170, 180, 190, 200) have a plurality of holes (1,2) inside of which the coolant flows, the holes (1,2) including at least one bent portion to a degree by which an outlet portion of a hole cannot be seen through from an inlet portion of the hole by a straight line.
